Europäisches Patentamt

European Patent Office

Office européen des brevets

(11) Publication number: **0 286 149**

**A2**

## (12) EUROPEAN PATENT APPLICATION

(21) Application number: 88200421.1

(22) Date of filing: 03.03.88

(51) Int. Cl.⁴: **C04B 38/10 , B01F 5/04 , B28C 7/00 , C04B 24/26**

(30) Priority: 06.03.87 CA 531444

(43) Date of publication of application:
12.10.88 Bulletin 88/41

(84) Designated Contracting States:
AT BE CH DE ES FR GB GR IT LI LU NL SE

(71) Applicant: ANTHES INDUSTRIES INC.
The Airport Executive Centre 6725 Airport
Road Fifth Floor
Mississauga Ontario L4V 1V2(CA)

(72) Inventor: Sulkiewicz, Jan
R.R. 4, Tottenham
Ontario L0G 1W0(CA)

(74) Representative: van der Kloet-Dorleijn,
Geertruida W.F., Drs. et al
EXTERPATENT Willem Witsenplein 4
NL-2596 BK 's-Gravenhage(NL)

(54) Method and apparatus for the production of cellular concrete and foam concentrate used therein.

(57) A foam concentrate consisting of a stabilizer, solvent, surfactant, water and alkaline polymer mixed in specified order and proportions, is foamed in a foam generator. A predetermined amount of the foamed foam is injected into a normal density concrete slurry in a continuous mixer. After sufficient mixing, the foamed, cellular concrete is ready for placement.

FIG I

This invention relates to lightweight, cellular concrete and particularly relates to the method of placement and the process of manufacture of cellular concrete, the foam concentrate used therein and the process of making the foam concentrate.

Lightweight, cellular concrete is a known construction material, widely used for insulation, for moderate strength fills and structural use, particularly in the areas of precast and prestressed concrete construction. Cellular concrete consists of a system of macroscopic air cells uniformly distributed in a matrix either of cement paste or of aggregate and cement paste. Cellular concrete is produced by several known methods, including:

1) forming air cells in a cement slurry by chemical reaction;

2) adding a proper foam concentrate to the slurry and mixing vigorously with a high-speed mixer; and

3) prefoaming a foam concentrate, and adding it directly to the concrete mix.

The primary drawback to the known methods of cellular concrete production is a lack of consistent quality in concrete mixes. As a result, concrete mixes of varying qualities and strengths may be placed side by side in the same form or element. This can lead to concentrated internal stress build-ups at the interfaces of the inconsistent batches, resulting in increased susceptability to crack formation and perhaps ultimately to collapse or disintegration of the structure.

To be effective in cellular concrete production, a foam concentrate must be capable of expanding above 200 to 500% in volume. However, the known foam concentrates which are capable of this level of expansion cannot sustain it, draining and collapsing in approximately 30 minutes. This disadvantage has been overcome by the applicant's foam concentrate which allows only 10% drainage in the first one-half hour, and 50% in six hours, with the dry matrix of the foam stable for more than twenty-four hours.

The key to the exceptional stability of the applicant's foam is a synergistic effect achieved by the addition of a small amount of polymer and fatty alcohol. Past attempts to utilize this synergistic effect resulting from the combination of polymer and fatty alcohol has resulted in an acidic type of foam (pH<7). The reason for the use of acidic type polymers is that only these types are tolerated by alcohols (e.g. where polymer is Carbopol 941 manufactured by B.F. Goodrich - acrylic acid). However, the alkali of cement destroys the acidic type of foam, and hence its efficacy is reduced in concrete production. In addition, because Municipal water supplies usually contain metallic ions which affects acidic polymer configuration in a negative way, which in turn leads to the rapid collapse of the foam, the known foams must use distilled water in order to have foam stability.

Applicant's foam however, utilizing an alkaline-type of polymer, and a strict order of mixing with the other ingredients, (e.g. RHOFLEX E-330 manufactured by Rohm & Haas of Canada Ltd.) is itself alkaline (pH < 7), and hence is suitable for the production of cellular concrete. Alkaline polymer introduced with foam into concrete will impregnate (coat) each air cell of concrete (porosity coating). Because the subject foam is alkaline, ordinary municipal water can be used. This is advantageous, because the need to use distilled water would severely limit application in construction. The foam of the present invention also has the advantage of being capable of foaming every known type of cement (with the exception of cement fondu - high alumina cement) including gypsum, clay slurry, fine earth slurry, oil drilling clays and filler and fine ores. No other known foam can tolerate 3/4" or larger aggregate in the concrete matrix. Applicant's foam however, can produce lightweight cellular concrete of exceptional stability even with this size aggregate.

Furthermore, in the past, there was no reliable technology and equipment to mix cellular concrete with consistent quality and place it in industrial quantity (viz. 30 to 80 yds$^3$/hr). Although there are many known methods of concrete placement, the present invention provides a novel method, utilizing the most modern equipment, fittings and instruments, all operating under the constant, precise control of a programmable computer which results in high-speed consistent quality production and placement of cellular concrete.

The present invention provides a process for the production of foam concentrate for use in making cellular concrete, comprising the steps of: (a) dissolving a stabilizer in a solvent; (b) adding a surfactant; (c) adding water; and (d) adding an alkaline polymer and the foam concentrate made by said process.

The present invention also provides a process for the production of foam concentrate for use in making cellular concrete, comprising the steps of: (a) dissolving a stabilizer in a solvent; and (b) adding a surfactant and the foam concentrate made by said process.

The present invention also provides a process for the production of a foaming agent for use in making cellular concrete, comprising a first step of: dissolving a stabilizer in a solvent and adding a surfactant; and a second step o f mixing an alkaline polymer with water; with a third step of combining the mixtures resulting from the first and second steps, and the foaming agent made by said process.

The present invention also provides a method of manufacturing cellular concrete, including the steps of: (a) providing a concrete slurry in a flow line connected to a continuous mixer; (b) foaming a foam concentrate to obtain a foam; (c) injecting said foam into said slurry in said continuous mixer to obtain a foamed concrete, and the cellular concrete made by said method.

The present invention also provides an apparatus for the production of foamed concrete, including: (a) a continuous mixer; (b) a flow line for concrete slurry, whereby concrete slurry can be pumped into said continuous mixer; (c) a foam generator; (d) means for injecting a measured amount of foam into said concrete for mixing with said concrete in said continuous mixer; and (e) a flow line for foamed concrete from said continuous mixer.

## DETAILED DESCRIPTION OF THE INVENTION

The foam concentrate of the present invention is prefoamed before mixing with a cement paste to produce a foamed concrete. The foam concentrate is produced by the following steps:

i) dissolving a fatty alcohol stabilizer in a solvent;

ii) adding a surfactant as a foaming agent to the above;

iii) adding sufficient water; and lastly

iv) adding an alkaline polymer.

This order of mixing allows the use of an alkaline type of polymer. Attempting to disperse the alkaline polymer in the solution of stabilizer and solvent before carrying out steps (ii) and (iii) will lead to the destruction of the polymer foam, resulting in coagulation and hardening of lumps suspended in alcohol.

A preferred embodiment of the formulation of the subject foam concentrate by weight and order of mixing is as follows:

Table 1

a) Stabilizer (e.g. N.-DODECYL ALCOHOL) 2.0%

b) Solvent (e.g. N-BUTYL ALCOHOL) 6.0%

c) Surfactant (e.g. STERLING AOS) 11.0%

d) Water (Town water)     77.0%

e) Polymer (e.g. RHOFLEX E-330)     4.0%

The present process of foam concentrate production can tolerate a higher load of polymer, which results in a stronger and finer foam, but no more than 20% polymer should be used. Moreover, the concentrate should preferably be diluted with water in a ratio of 1:10 before transmission to a foam generator for foaming.

Although preferably the proportion of components should be as indicated in Table 1, the proportion may vary, ± 30%; variance from the preferred embodiment may result in a quality of foam which is not as high as that attainable if the proportions of constituents listed in Table I are followed. Furthermore, the foam concentrate can be diluted with water in ratios of 1:5 to 1:30, but the foam produced will also be of lesser quality.

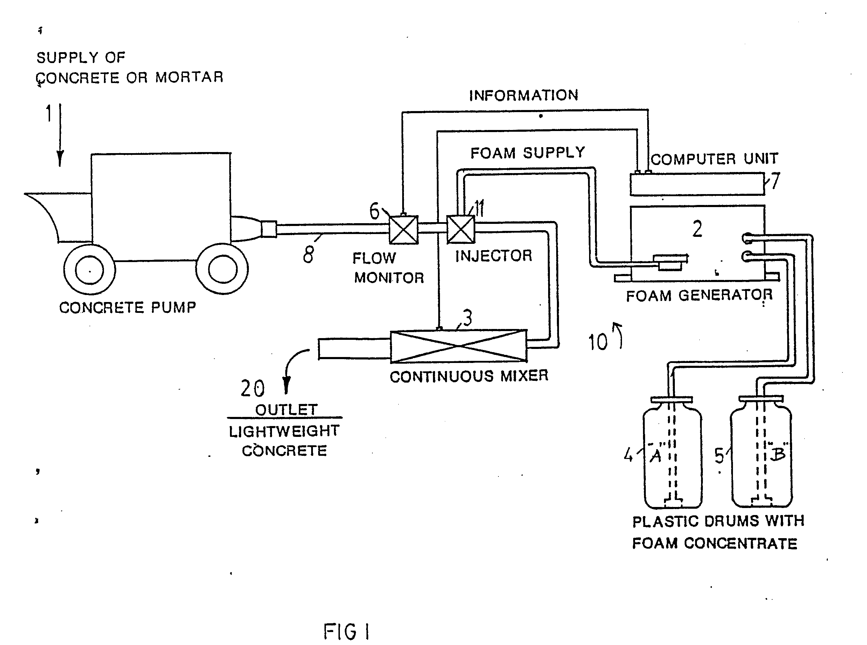

In a drawing which illustrates an embodiment of the invention, Figure 1 is a schematic of a continuous mixing process for cellular concrete in accordance with the present invention.

Referring to Figure 1, normal density concrete/mortar or cement slurry is delivered by a ready-mix truck to the job site and discharged to a concrete pump chute feeder (indicated generally at 1). This normal density mix is pumped to the placement area indicated generally as 20. A compact unit (indicated generally at 10) consisting of the foam generator 2, continuous mixer 3, and plastic drums 4,5 containing the foam concentrate A and water B are located along the pump line, near the placement area. A flow monitor 6, continuously monitors the volume of cement slurry pumped through the pipe 8, transmitting that information to a computer unit 7, which simultaneously analyses the information, and orders the foam generator 2 to produce the proper quantity of foam required to achieve design density. The foam generator 2 receives the required amount of foam concentrate A and water B from the plastic drums 4 and 5. An injector unit 11 injects the foam directly into the continuous mixer 3 which is installed on the hose line of the concrete pump 1. The cement slurry and foam are mixed thoroughly in the continuous mixer 3 resulting in a homogenous concrete mix, which is then ready for placement.

In another embodiment, drum 4 contains foam concentrate A' and drum 5 contains mixture B'. The method of making the cellular concrete is the same as described above.

Foam concentrate A' is similar to the foam concentrate A which is made in the manner described herein except that the foam concentrate A' consists of only the stabilizer, the solvent and the surfactant. Water and alkaline polymer are not added. The other components are added in the same quantities and in the same manner as in the foam concentrate A. The alkaline polymer and diluting water are mixed to form the mixture B' which is then mixed with the foam concentrate A' during the foam generating process described above.

## Claims

1. A process for the production of foam concentrate for use in making cellular concrete, comprising the steps of:
   a) dissolving a stabilizer in a solvent;
   b) adding a surfactant;
   c) adding water; and
   d) adding an alkaline polymer.

2. The process claimed in Claim 1 characterized in that said stabilizer is a fatty alcohol, preferably N-dodecyl alcohol, said solvent is of very low viscosity alcohol compatible with said stabilizer, preferably N-butyl alcohol, said surfactant is sodium alpha olefin sulphonate, and said alkaline polymer is an aqueous type of polymer characterized by pH > 7, the generic group of which is called latex.

3. The process according to Claim 1 or 2, characterized in that said foam concentrate includes by weight 1.4 to 2.6 parts of said stabilizer, 4.2 to 7.8 parts of said solvent, 7.7 to 14.3 parts of said surfactant and 2.8 to 5.2 parts of said alkaline polymer, preferably 2 parts of said stabilizer, 6 parts of said solvent, 11 parts of said surfactant, and 77 parts of water, and 4 parts of said alkaline polymer.

4. The process according to Claim 1-3, characterized in that said stabilizer solvent and surfactant are added in order to said water and mixed together before addition of said alkaline polymer.

5. The foam concentrate obtained according to the process of one or more of the preceding Claims 1-4.

6. The foam concentrate manufactured by the process of the preceding claims, characterized in that during the carrying out of said process said stabilizers, said solvent and said surfactant are added in order to said water and mixed before addition thereto of said alkaline polymer.

7. A process for the production of foam concentrate for use in making cellular concrete, comprising the steps of:
   a) dissolving a stabilizer in a solvent; and
   b) adding a surfactant.

8. The process claimed in Claim 7, characterized in that said stabilizer is a fatty alcohol, preferably N-dodecyl alcohol, said solvent is of very low viscosity alcohol compatible with said stabilizer, preferably N-butyl alcohol, and said surfactant is sodium alpha olefin sulphonate.

9. The process claimed in Claims 7 or 8, characterized in that said foam concentrate includes by weight 1.4 to 2.6 parts of said stabilizer, 4.2 to 7.8 parts of said solvent, and 7.7 to 14.3 parts of said surfactant, preferably 2 parts of said stabilizer, 6 parts of said solvent and 11 parts of said surfactant.

10. The foam concentrate made by the process according to Claim 7-9.

11. A process for the production of a foaming agent for use in making cellular concrete, comprising a first step of:
   dissolving a stabilizer in a solvent and adding a surfactant; and a second step of mixing an alkaline polymer with water; with a third step of combining the mixtures resulting from the first and second steps.

12. The process claimed in Claim 11, characterized in that said stabilizer is a fatty alcohol, preferably N-dodecyl alcohol, said solvent is of very low viscosity alcohol compatible with said stabilizer, preferably N-butyl alcohol, said surfactant is sodium alpha olefin sulphonate, and said alkaline polymer is an aqueous type of polymer characterized by pH > 7, the generic group of which is called latex.

13. A method of manufacturing cellular concrete, comprising the steps of:
   a) providing a concrete slurry in a flow line connected to a continuous mixer;
   b) foaming a foam concentrate to obtain a foam;
   c) injecting said foam into said slurry in said continuous mixer to obtain a foamed concrete.

14. A method as claimed in Claim 13, characterized in that said foam concentrate is alkaline and is preferably composed of foam 1.4% to 2.6% by weight relative to the total weight of the said foam concentrate of fatty alcohol dissolved in from 4.2 to 7.8% by weight of a solvent from 7.7 to 14.3% by weight of a surfactant, all of the foregoing being combined with water, and from 2.8 to 5.2% of an alkaline polymer, whereby said foam concentrate is more particularly composed, by weight relative to the total weight of the foaming agent, of 2 parts of N-dodecyl alcohol dissolved in 6 parts N-butyl alcohol, 11 parts sterling AOS and 4 parts of an aqueous type of polymer characterized by pH > 7, the generic group of which is called latex, and 77 parts of water.

15. A method as claimed in Claims 13 of 14, characterized in that said foam concentrate is diluted with a further quantity of water in the ratio of one part concentrate to ten parts water, before foaming.

16. A method as claimed in Claims 13-15, characterized in that the flow of said concrete in said flow line is monitored, and analyzed by a computer to determine the necessary quantity of foam to be injected into said concrete in said continuous mixer.

17. A method as claimed in Claim 13, characterized in that said foam concentrate comprises the foam concentrate obtained according to the process according to Claim 7-9.

18. A method as claimed in claim 13, characterized in that said foam concentrate is the foaming agent obtained according to the process according to Claim 11-12.

19. Foamed concrete, produced by the method of Claims 14-17.

20. An apparatus for the production of foamed concrete, inclusing:

a) a continuous mixer;

b) a flow line for concrete slurry, whereby concrete slurry can be pumped into said continuous mixer;

c) a foam generator;

d) means for injecting a measured amount of foam into said concrete for mixing with said concrete in said continuous mixer; and

e) a flow line for foamed concrete from said continuous mixer.

21. An apparatus as claimed in Claim 20, further including a flow monitor in said flow line(a), and computer means for determining the quantity of foam to be injected in said concrete, depending on the reading of said flow monitor.

22. The process claimed in claims 11 or 12, characterized in that said foaming agent includes by weight 2 parts of said stabilizer, 6 parts of said solvent, 11 parts of said surfactant and 570 parts of water and alkaline polymer mixture.

23. The process claimed in Claim 22, characterized in that said water and alkaline polymer mixture includes by weight 4 parts alkaline polymer and 1,077 parts of water.

SUPPLY OF
CONCRETE OR MORTAR

1

INFORMATION

FOAM SUPPLY

COMPUTER UNIT

7

6

8

FLOW
MONITOR

11

INJECTOR

2

FOAM GENERATOR

CONCRETE PUMP

3

10

20

CONTINUOUS MIXER

OUTLET
LIGHTWEIGHT
CONCRETE

4  A        5  B

PLASTIC DRUMS WITH
FOAM CONCENTRATE

FIG I